# NEUE EUROPÄISCHE PATENTSCHRIFT

(11) **EP 2 417 058 B2**
(45) Veröffentlichungstag und Bekanntmachung des Hinweises auf die Entscheidung über den Einspruch: **11.08.2021**
(45) Hinweis auf die Patenterteilung: 01.06.2016
(21) Anmeldenummer: 10711241.9
(22) Anmeldetag: 29.03.2010
(51) Int. Cl.: H01M 4/92, H01M 8/10, H01M 8/12, C01B 3/50, H01M 8/06

(54) **VERFAHREN ZUR ELEKTROCHEMISCHEN ABTRENNUNG VON WASSERSTOFF AUS EINEM REAKTIONSGEMISCH**
METHOD FOR ELECTROCHEMICALLY REMOVING HYDROGEN FROM A REACTION MIXTURE
PROCÉDÉ DE SÉPARATION ÉLECTROCHIMIQUE D'HYDROGÈNE PRÉSENT DANS UN MÉLANGE DE RÉACTION

(30) Priorität: 06.04.2009 EP 09157394
(43) Veröffentlichungstag der Anmeldung: 15.02.2012
(73) Patentinhaber: BASF SE, 67056 Ludwigshafen am Rhein (DE)
(72) Erfinder: COELHO TSOU, Joana, 69120 Heidelberg (DE); PANCHENKO, Alexander, 67063 Ludwigshafen (DE); WENTINK, Annebart, Engbert, 68161 Mannheim (DE); AHRENS, Sebastian, 67059 Ludwigshafen (DE); HEIDEMANN, Thomas, 68519 Viernheim (DE); HUBER, Guenther, 67071 Ludwigshafen (DE); KOSTOVA, Albena, 68163 Mannheim (DE)
(74) Vertreter: Ellwanger & Baier Patentanwälte Partnerschaftsgesellschaft
(86) Internationale Anmeldenummer: PCT/EP2010/054117
(87) Internationale Veröffentlichungsnummer: WO 2010/115761

(56) Entgegenhaltungen:
- EP-B1- 2 417 083
- WO-A1-03/084905
- WO-A1-2006/031871
- GB-A- 1 179 033
- US-A1- 2003 144 565
- US-B1- 6 235 417
- Hamakawa S.: "Electrochemical Methane Coupling Using Protonic Conductors", J. Electrochemical Soc., vol. 140, no. 2, 1993, pages 459-462,
- Sundmacher K. et al: "Solid electrolyte membrane reactors: Status and trends", Catalysis Today, vol. 104, 2005, pages 185-189,
- HOLLEMAN A F, WIBERG E: "Lehrbuch der Anorganischen Chemie , CHEMISCHE EIGENSCHAFTEN", LEHRBUCH DER ANORGANISCHEN CHEMIE., XX, XX, 1 January 1985 (1985-01-01), pages 1188-1190, XX

## Beschreibung

Die vorliegende Erfindung betrifft ein Verfahren zur elektrochemischen Abtrennung von Wasserstoff aus einem Reaktionsgemisch mittels einer gasdichten Membran-Elektroden-Assembly, die mindestens eine selektiv protonenleitende Membran und auf jeder Seite der Membran mindestens einen Elektrodenkatalysator aufweist.

Bei vielen chemischen Umsetzungen entstehen Reaktionsgemische, bei denen als Nebenprodukt Wasserstoff anfällt. In vielen Fällen ist es notwendig, den Wasserstoff aus dem Reaktionsgemisch zu entfernen. Beispielsweise kann der Wasserstoff die Lage des Reaktionsgleichgewichts ungünstig beeinflussen und so zu unbefriedigende Ausbeuten des gewünschten Produkts führen. Weiterhin kann der Wasserstoff im Reaktionsgemisch die weitere Verwendung des Produkts erschweren. Zudem stellt der Wasserstoff dabei eine wertvolle Komponente des Reaktionsgemisches dar.

Ein Beispiel für eine chemische Umsetzung, bei der ein Reaktionsgemisch entsteht, das als Nebenprodukt Wasserstoff enthält, ist die Umsetzung von Aliphaten zu Aromaten unter nicht-oxidativen Bedingungen. Diese wird als nicht-oxidative Dehydroaromatisierung (DHAM) bezeichnet. Durch die dehydrierende Cyclisierung entstehen aus Aliphaten aromatische Kohlenwasserstoffe und Wasserstoff. Beispielsweise werden aus 6 mol Methan 1 mol Benzol und 9 mol Wasserstoff gebildet.

Die DHAM ist auch ein Beispiel für eine Reaktion, bei der der sich bildende Wasserstoff das Reaktionsgleichgewicht in unerwünschter Weise beeinflusst. Je mehr Wasserstoff im Reaktionsgemisch enthalten ist, desto weniger Methan wird zu Benzol umgesetzt. Thermodynamische Betrachtungen zeigen bei der DHAM von Methan eine Limitierung der Reaktion durch die Lage des Gleichgewichtes (D. Wang, J. H. Lunsford und M. P. Rosynek, "Characterization of a Mo/ZSM-5 catalyst for the conversion of methane to benzene", Journal of Catalysis 169, 347-358 (1997)). Rechnungen unter Berücksichtigung der Komponenten Methan, Benzol, Naphthalin und Wasserstoff ergeben, dass die Gleichgewichtsumsätze für die isotherme Umsetzung von Methan zu Benzol (und Naphthalin) mit steigendem Druck und fallender Temperatur abnehmen, beispielsweise liegt der Gleichgewichtsumsatz bei 1 bar und 750 °C bei etwa 17 %. Die Entfernung von Wasserstoff aus dem Reaktionsgemisch kann den Umsatz steigern.

Die Abtrennung des Wasserstoffs aus dem Reaktionsgemisch ist oftmals mit einem hohen apparativen Aufwand und Energieeinsatz verbunden.

Ein Verfahren zur DHAM von Kohlenwasserstoffen, insbesondere von Erdgas, mit Abtrennung des H₂ sowie der aromatischen Kohlenwasserstoffe aus dem Produktgas und Rückführung des restlichen Produktgases in die Reaktionszone bzw. die erneute Umsetzung des Produktgases nach Abtrennung des Wasserstoffs und ohne vorherige Abtrennung der aromatischen Kohlenwasserstoffe in einer weiteren Reaktionsstufe wird in der US 7,019,184 B2 und GB 1,179,033 beschrieben. Als Methoden zur Abtrennung des H₂ werden wasserstoffselektive Membranen und Druckwechseladsorption genannt. Der abgetrennte Wasserstoff kann zur Energieerzeugung eingesetzt werden, beispielsweise in einer Verbrennungskammer oder in einer Brennstoffzelle.

Bei der Wasserstoffabtrennung mittels einer selektiv wasserstoffdurchlässigen Membran wandert der Wasserstoff als H₂-Molekül durch die Membran. Die Membran besteht dabei üblicherweise aus Pd-Blech oder porösen Polymeren. Die Diffusionsgeschwindigkeit hängt dabei vom Partialdruckunterschied des Wasserstoffs zwischen Retentat- und Permeat-Seite der Membran ab. Dieser kann prinzipiell durch drei verschiedene Methoden beeinflusst werden: 1) Kompression des Feedgases, wodurch sich der Partialdruck erhöht, 2) Erzeugen eines Vakuums auf der Permeatseite oder 3) Verwenden eines Sweep-Gases auf der Permeatseite, das den Partialdruck des Wasserstoffs erniedrigt. Diese Methoden sind entweder mechanisch anspruchsvoll (Optionen 1) und 2)) oder erfordern die Trennung des Sweep-Gases vom Wasserstoff. Um höhere Diffusionsgeschwindigkeiten zu erreichen, muss somit bei höheren Druckunterschieden gearbeitet werden, die hohe Anforderungen an die mechanische Stabilität der Membran stellen, zudem müssen die entsprechenden Vorrichtungen zum Verdichten und Expandieren des Gasgemisches vorhanden sein. Aus kinetischen Gründen bleibt stets ein gewisser Anteil des Wasserstoffs im Retentat zurück. Beispielsweise enthält das Permeat einer H₂/CH₄-Mischung, das mittels einer wasserstoffdurchlässigen Polymermembran gewonnen wird, üblicherweise auf 10 Moleküle H₂ 1 Molekül CH₄. Bei einer Pd-Membran, die ab etwa 200°C selektiv wasserstoffdurchlässig wird und ihre optimale Trenneigenschaft bei 400°C bis 500°C erreicht, enthält das Permeat üblicherweise 1 Molekül CH₄ auf 200 Moleküle H₂.

Bei der Druckwechsel-Adsorption wird ein Adsorbens zyklisch in einer ersten Phase mit dem wasserstoffhaltigen Strom beaufschlagt, wobei alle Komponenten außer Wasserstoff durch Adsorption zurückgehalten werden. In einer zweiten Phase werden diese Komponenten durch erniedrigten Druck wieder desorbiert. Es handelt sich hierbei um ein technisch sehr aufwändiges Verfahren, bei dem Adsorbentien eingesetzt werden müssen und ein Wasserstoff enthaltender Abfallstrom entsteht, dessen Wasserstoffanteil mehr als 40 % betragen kann, siehe Ullmann's Encyclopedia of Industrial Chemistry, "Membranes: Gas Separation-Applications", D.B. Strooky, Elah Strategies, Seite 6, Chesterfield, Missouri, USA, 2005 Wiley-VCH Verlag, Weinheim.

Neben der Druckwechsel-Adsorption und dem Einsatz von selektiv wasserstoffdurchlässigen Membranen ist die Verwendung einer so genannten "Cold Box" ein übliches Verfahren zur Abtrennung von Wasserstoff aus Gasmischungen.

Bei der Wasserstoffabtrennung mittels einer Cold Box wird das Gasgemisch unter Drücken von 30 bis 50 bar auf etwa -150°C bis -190°C abgekühlt. Die Erzeugung dieser tiefen Temperaturen ist kostspielig. Soll das dabei von Wasserstoff befreite Gemisch erneut in einer Reaktion eingesetzt werden, muss es auch wieder auf die entsprechende Reaktionstemperatur erwärmt werden, beispielsweise auf 600 bis 1000°C für die Dehydroaromatisierung.

Die Abtrennung von Wasserstoff aus einer Mischung aus Wasserstoff und Methan wird von B. Ibeh et al. (International Journal of Hydrogen Energy 32 (2007) Seiten 908 bis 914) beschrieben. Ihr Ausgangspunkt war, die Eignung von Erdgas als Trägergas für den Transport von Wasserstoff durch die bereits vorhandene Infrastruktur für den Erdgastransport zu untersuchen, wobei der Wasserstoff nach dem gemeinsamen Transport mit dem Erdgas von diesem wieder abgetrennt werden muss. B. Ibeh et al. verwendeten zur Abtrennung von Wasserstoff aus Wasserstoff-Methan-Mischungen eine Brennstoffzelle mit einer einzelnen Protonen-Austausch-Membran und Pt oder Pt/Ru-Anodenelektrokatalysatoren. Der Brennstoffzelle wurden Wasserstoff-Methan-Mischungen bei Atmosphärendruck und Temperaturen zwischen 20 bis 70°C zugeführt.

Weder die Druckwechsel-Adsorption noch die Cold box sind zur Abtrennung von Wasserstoff aus einem Reaktionsgemisch geeignet, während die Reaktion läuft.

Die vorliegende Anmeldung betrifft ein Verfahren zur elektrochemischen Abtrennung von Wasserstoff aus einem Wasserstoff erhaltenden Reaktionsgemisch R mittels einer gasdichten Membran-Elektroden-Assembly, die mindestens eine selektiv protonenleitende Membran und auf jeder Seite der Membran mindestens einen Elektrodenkatalysator aufweist, wobei auf der Retentatseite der Membran mindestens ein Teil des im Reaktionsgemisch R enthaltenen Wasserstoffs an dem Anodenkatalysator zu Protonen oxidiert wird und die Protonen nach Durchqueren der Membran auf der Permeatseite an dem Kathodenkatalysator gemäß I) zu Wasserstoff reduziert werden und/oder II) mit Sauerstoff zu Wasser umgesetzt werden, wobei der Sauerstoff aus einem Sauerstoff enthaltenden Strom O stammt, der mit der Permeatseite der Membran in Kontakt gebracht wird, wobei als selektiv protonenleitende Membran eine Keramikmembran eingesetzt wird, dadurch gekennzeichnet, dass der Wasserstoff direkt aus der Reaktionszone abgetrennt wird, in der das Reaktionsgemisch R gebildet wird, und dass es sich bei der Wasserstoff bildenden Reaktion um die nicht-oxidative Dehydroaromatisierung von aliphatischen Kohlenwasserstoffen mit 1 bis 4 C-Atomen in Gegenwart eines Katalysators handelt Aufgabe der vorliegenden Erfindung ist es daher, ein Verfahren zur Abtrennung von Wasserstoff aus einem Wasserstoff enthaltenden Reaktionsgemisch bereitzustellen, das die Nachteile der aus dem Stand der Technik bekannten Verfahren zur Abtrennung von Wasserstoff vermeidet. Insbesondere soll ermöglicht werden, den Wasserstoff direkt aus der Reaktionszone abzutrennen, um bei Wasserstoff bildenden Reaktionen die Lage des Reaktionsgleichgewichts beeinflussen zu können. Das Verfahren soll helfen, die bei der Reaktion eingesetzten Edukte und den im Reaktionsgemisch vorhandenen Wasserstoff effizient zu nutzen. Zudem soll es eine möglichst günstige Energiebilanz aufweisen und apparativ wenig aufwändig sein.

Die Aufgabe wird gelöst durch ein Verfahren zur elektrochemischen Abtrennung von Wasserstoff aus einem Wasserstoff erhaltenden Reaktionsgemisch R mittels einer gasdichten Membran-Elektroden-Assembly, die mindestens eine selektiv protonenleitende Membran und auf jeder Seite der Membran mindestens einen Elektrodenkatalysator aufweist, wobei auf der Retentatseite der Membran mindestens ein Teil des im Reaktionsgemisch R enthaltenen Wasserstoffs an dem Anodenkatalysator zu Protonen oxidiert wird und die Protonen nach Durchqueren der Membran auf der Permeatseite an dem Kathodenkatalysator gemäß
I zu Wasserstoff reduziert werden und/oder
II mit Sauerstoff zu Wasser umgesetzt werden, wobei der Sauerstoff aus einem Sauerstoff enthaltenden Strom O stammt, der mit der Permeatseite der Membran in Kontakt gebracht wird.

Das erfindungsgemäße Verfahren hat gegenüber den im Stand der Technik beschriebenen Verfahren den Vorteil, dass der Wasserstoff elektrochemisch aus dem Wasserstoff erhaltenden Reaktionsgemisch R abgetrennt wird. Die Triebkraft der Wasserstoffabtrennung beruht entweder auf einem Potentialunterschied zwischen den beiden Seiten der selektiv für Protonen durchlässigen Membran (Alternative I), oder auf der negativen freien Enthalpie der Reaktion von Wasserstoff und Sauerstoff zu Wasser (Alternative II).

Durch den Einsatz selektiv protonenleitender Membranen kann das Verfahren weitgehend unabhängig von Druckunterschieden, wie sie bei der Verwendung von selektiv Wasserstoffmolekül durchlässigen Membranen notwendig sind, betrieben werden. Dadurch kann die Wasserstoffabtrennung bei niedrigeren Drücken und Druckunterschieden durchgeführt werden, wobei vorzugsweise auf einen von außen aufgeprägten Druckunterschied völlig verzichtet wird. Dadurch wird die mechanische Beanspruchung der Membran deutlich verringert, was zu einer Erhöhung ihrer Langzeitstabilität führt. Darüber hinaus vergrößert sich die Auswahl an für die Membran in Frage kommenden Materialien.

Die Möglichkeit, den Wasserstoff aus dem Reaktionsgemisch bei niedrigeren Drücken abzutrennen, erspart zudem apparativ aufwendige Trennverfahren, wie sie bei der Druckwechseladsorption oder bei Verwendung einer "Cold Box" notwendig sind.

Darüber hinaus weist das erfindungsgemäße Verfahren eine verbesserte Energiebilanz auf, da energieaufwendige Temperaturwechsel wie Abkühlungs- und Aufheizungszyklen vermieden werden. Die Entfernung des Wasserstoffs aus dem Reaktionsgemisch kann außerdem bei Gleichgewichtsreaktionen wie der DHAM zu einer Gleichgewichtsverschiebung in Richtung des Zielprodukts und damit höheren Ausbeuten führen.

Die elektrochemische Abtrennung von Wasserstoff ist im Vergleich zu der Abtrennung von Wasserstoff mittels einer wasserstoffselektiven Membran deutlich effektiver. Daher kann die erforderliche Membranfläche verkleinert werden oder bei gleicher Membranfläche deutlich mehr Wasserstoff aus dem Reaktionsgemisch abgetrennt werden. Die im Reaktionsgemisch nach Abtrennung zurückbleibende Menge an Wasserstoff ist dabei deutlich geringer als bei der Abtrennung mittels einer wasserstoffselektiven Membran.

Wird das erfindungsgemäße Verfahren gemäß Alternative I betrieben, wird bei dem Verfahren sehr reiner Wasserstoff gewonnen. Sehr reiner Wasserstoff kann in vielen weiteren Reaktionen oder Prozessen, die auf Verunreinigungen sensibel reagieren eingesetzt werden und stellt somit ein wertvolles Nebenprodukt dar.

Wird das erfindungsgemäße Verfahren gemäß Alternative II betrieben, wird bei dem Verfahren elektrische Energie und Wärme frei. Diese Energie kann zum Betrieb des erfindungsgemäßen Verfahrens genutzt werden. Dadurch wird die Energiebilanz des erfindungsgemäßen Verfahrens weiter verbessert.

Je nach Betriebsweise kann so vom Anwender gesteuert werden, ob mehr oder ausschließlich Wasserstoff oder mehr oder ausschließlich elektrische Energie und Wärme bei dem Verfahren gewonnen wird, insbesondere kann die zur Abtrennung des Wasserstoffs gemäß Alternative I erforderliche elektrische Energie durch die gleichzeitige Abtrennung von Wasserstoff gemäß Alternative II bereit gestellt werden.

Nachfolgend wird die Erfindung ausführlich beschrieben.

Erfindungsgemäß wird mindestens ein Teil des im Reaktionsgemisch R enthaltenen Wasserstoffs elektrochemisch mittels einer gasdichten Membran-Elektroden-Assembly abgetrennt, wobei der abzutrennende Wasserstoff in Form von Protonen durch die Membran transportiert wird. Als Membran-Elektroden-Assembly (MEA) werden die Elektroden mit der dazwischen angeordneten Membran bezeichnet. Erfindungsgemäß weist die gasdichte MEA mindestens eine selektiv protonenleitende Membran auf.

Der Produktstrom P wird auf einer Seite der Membran entlang geführt. Diese Seite wird im Folgenden Retentatseite genannt. Die andere Seite der Membran wird im Folgenden als Permeatseite bezeichnet. Auf der Permeatseite wird der gemäß Alternative I entstandene Wasserstoff und/oder das gemäß Alternative II entstandene Wasser abgeführt. Die Membran weist auf jeder Seite mindestens einen Elektrodenkatalysator auf, wobei im Rahmen dieser Beschreibung der auf der Retentatseite befindliche Elektrodenkatalysator als Anodenkatalysator und der auf der Permeatseite befindliche Elektrodenkatalysator als Kathodenkatalysator bezeichnet wird. Auf der Retentatseite wird der Wasserstoff am Anodenkatalysator zu Protonen oxidiert, diese durchqueren die Membran und werden auf der Permeatseite am Kathodenkatalysator zu Wasserstoff reduziert (Alternative I) oder mit Sauerstoff zu Wasser umgesetzt (Alternative II). Gemäß Alternative II wird dazu an der Permeatseite ein Sauerstoff enthaltender Strom O entlanggeführt und mit der Membran in Kontakt gebracht. Bei Alternative I muss für den Transport der Protonen durch die Membran elektrische Energie aufgewendet werden, die durch Anlegen einer Gleichspannung an die beiden Seiten der Membran mittels Elektroden zugeführt wird. Bei Alternative II entsteht elektrische Energie.

Unter Reaktionsgemisch werden im Rahmen der vorliegenden Erfindung Gemische verstanden, die durch eine chemische Umsetzung erhalten werden. Unter chemischer Umsetzung werden Reaktionen verstanden, bei denen aus einer oder mehreren chemischen Eduktverbindung(en) eine oder mehrere Produktverbindung(en) hergestellt werden. Gemische, die lediglich durch physikalisches Mischen ohne chemische Umsetzung erhalten werden, sind keine Reaktionsgemische im Sinn der vorliegenden Erfindung. Auch natürlich vorkommende Gemische wie Erdgas sind keine Reaktionsgemische im Sinn der vorliegenden Erfindung.

In einer bevorzugten Ausführungsform werden die Reaktionsgemische direkt eingesetzt. Direkt bedeutet in diesem Zusammenhang, dass das Reaktionsgemisch unmittelbar, ohne vorherige Reinigung oder Aufarbeitung in dem erfindungsgemäßen Verfahren eingesetzt wird.

Bevorzugt wird ein Reaktionsgemisch R eingesetzt, das aus einer Wasserstoff bildenden Reaktion stammt. Weiterhin bevorzugt wird der Wasserstoff direkt aus der Reaktionszone abgetrennt, in der das Reaktionsgemisch R gebildet wird.

Besonders bevorzugt wird der Wasserstoff aus der Reaktionszone abgetrennt, während die zum Reaktionsgemisch R führende Reaktion stattfindet.

Der gemäß Alternative I erhaltene Wasserstoff weist eine hohe Reinheit auf. Er kann gesammelt und verkauft oder zur Energieerzeugung verwendet werden. Aufgrund der hohen Reinheit kann der Wasserstoff auch in weitere chemische Reaktionen oder Prozessen eingesetzt werden, die sensibel auf Verunreinigungen reagieren. Bei dem Verfahren gemäß Alternative II wird Wärme und elektrische Energie frei. Die Wärme kann beispielsweise zum Heizen der Reaktion eingesetzt werden, in der das Reaktionsgemisch R gebildet wird.

Um einen guten Kontakt der Membran mit dem auf der Retentatseite befindlichen Wasserstoff und einen guten Abtransport des abgetrennten Wasserstoffs bzw. des Wassers auf der Permeatseite zu gewährleisten, sind die Elektrodenschichten üblicherweise mit Gasverteilerschichten kontaktiert. Diese sind zum Beispiel Platten mit einer gitterartigen Oberflächenstruktur aus einem System feiner Kanäle oder Schichten aus porösem Material wie Vlies, Gewebe oder Papier. Die Gesamtheit von Gasverteilerschicht und Elektrodenschicht wird im Allgemeinen als Gasdiffusionselektrode (GDE) bezeichnet. Durch die Gasverteilerschicht wird der abzutrennende Wasserstoff auf der Retentatseite nahe an die Membran und den Anodenkatalysator geführt und auf der Permeatseite der Abtransport des gebildeten Wasserstoffs beziehungsweise Wassers erleichtert.

Die erfindungsgemäß eingesetzte MEA ist gasdicht, das heißt sie weist praktisch keine Porosität auf, durch die Gase in atomarer oder molekularer Form von einer Seite auf die andere Seite der MEA gelangen können, noch weist sie Mechanismen auf, durch die Gase unselektiv beispielsweise durch Adsorption, Lösung in der Membran, Diffusion und Desorption durch die MEA transportiert werden können.

Die Dichtigkeit der Membran-Elektroden-Assembly (MEA) kann durch eine gasdichte Membran, durch eine gasdichte Elektrode und/oder einen gasdichten Elektrodenkatalysator gewährleistet werden. So kann als gasdichte Elektrode zum Beispiel eine dünne metallische Folie verwendet werden, beispielsweise eine Pd-, Pd-Ag- oder Pd-Cu-Folie.

Die erfindungsgemäß eingesetzte Membran leitet selektiv Protonen, das heißt insbesondere, dass sie nicht elektronenleitend ist. Im erfindungsgemäßen Verfahren können als protonenleitende Membran prinzipiell alle Materialien eingesetzt werden, die im Stand der Technik als Membranmaterial für Brennstoffzellen (Standard SOFC (Solide Oxide Fuel Cell)) eingesetzt werden.

Geeignete protonenleitende Keramiken sind beispielsweise in Solid State lonics 125, (1999), 271-278; Journal of Power Sources 180, (2008), 15-22; lonics 12, (2006), 103-115; Journal of Power Sources 179 (2008) 92-95; Journal of Power Sources 176 (2008) 122-127 und Electrochemistry Communications 10 (2008) 1005-1007 beschrieben.

Beispiele für protonenleitende Keramiken sind SrCeO₃, BaCeO₃, Yb:SrCeO₃, Nd:BaCeO₃, Gd:BaCeO₃, Sm:BaCe0₃, BaCaNd0₉, Y:BaCeO₃, Y:BaZrCeO₃, Pr-dotiertes Y:BaCeO₃, Gd:BaCeO₃, BaCe_{0,9}Y_{0,1}O_{2,95} (BYC), SrCe_{0,95}Yb_{0,05}O_{3-α}, BaCe_{0,9}Nd_{0,10}O_{3-α}, CaZr_{0,96}In_{0,04}O_{3-α}, (α bezeichnet die Anzahl der Sauerstofffehlstellen pro Formeleinheit des Oxides vom Perowskittyp); Sr-dotiertes La₃P₃O₉, Sr-dotiertes LaPO₄, BaCe_{0,9}Y_{0,1}O_{3-α} (BCY), BaZr_{0,9}Y_{0,1}O_{3-α} (BZY), Ba₃Ca_{1,18}Nb_{1,82}O_{8,73} (BCN18), (La_{1,95}Ca_{0,05})Zr₂O_{7-α}, La₂Ce₂O₇, Eu₂Zr₂O₇, H₂S/(B₂S₃ oder Ga₂S₃)/GeS₂, SiS₂, AS₂S₃ oder Csl; BaCe_{0,8}Gd_{0,2}O_{3-α}, (BCGO); Gd-dotierte BaCeO₃ wie BaCe_{0,85}Y_{0,15}O_{3-α} (BCY15) und BaCe_{0,8}SM_{0,2}O_{3-α}, xAl₂O₃(1-x)SiO₂, SnP₂O₇, Sn₁₋ₓInₓP₂O₇ (X = 0.0 - 0.2). Geeignete Materialien zur Ausbildung von Anode und Kathode sind z.B. in Journal of Power Sources 180, (2008), 15-22 beschrieben.

Zur Ausbildung einer Anode im erfindungsgemäßen Verfahren können alle Materialien eingesetzt werden, die im Stand der Technik als Anodenmaterialien für Brennstoffzellen (Standard SOFC (Solid Oxide Fuel Cell)) eingesetzt werden. Geeignete Materialien zur Ausbildung einer Anode sind z.B. Ni, Pd, Pt, Ag, Cu, Fe, Cr, Ti, V, Mn, Au, Mo, Molybdäncarbid, W, Wolframcarbid, Re, Ru, Co, Zr, Rh, Ir, Y, Nb, elektrisch leitende Formen von Kohlenstoff wie Ruß, Graphit und Nanoröhrchen sowie Mischungen und Legierungen dieser Elemente. Darüber hinaus sind z.B. Pt/Ni-Legierungen, Pdbeladenes Eisenoxide, wie FeO, Pr dotierte Y:BaCeO₃, BaCeYO₃, Ni-BaCeSmO₃, Ni-BaCeGdO₃ und Ni-BaCeNdO₃ geeignet.

Zur Ausbildung einer Kathode im erfindungsgemäßen Verfahren können alle Materialien eingesetzt werden, die im Stand der Technik als Kathodenmaterialien für Brennstoffzellen (Standard SOFC (Solid Oxide Fuel Cell) eingesetzt werden. Geeignete Materialien zur Ausbildung einer Kathode sind z.B. Ni, Pd, Pt, Ag, Cu, Fe, Cr, Ti, V, Mn, Au, Mo, Molybdäncarbid, W, Wolframcarbid, Re , Ru, Co, Zr, Rh, Ir, Y, Nb, elektrisch leitende Formen von Kohlenstoff wie Ruß, Graphit und Nanoröhrchen sowie Mischungen und Legierungen dieser Elemente.. Darüber hinaus sind z.B. BaCePrYO₃, BaPrCoO₃, BaPrYO₃, LaCaFeCoO₃, BaSrCoFeO₃+BaCeSmO₃, LaSrCoO₃+BaCeGdO₃ und LaSrCoO₃+BaCeNdO₃ geeignet.

Die vorstehend genannten Anoden- und Kathodenmaterialien können beliebig kombiniert werden. Geeignete Kombinationen von Anode und Kathode zur Ausbildung einer Membran Elektrodeneinheit (Anode/Kathode) sind z.B. Pt/Pt, Ni/Ni, Pd/Pd, Cu/Cu, Ag/Ag, Fe/Fe, Cr/Cr, Ti/Ti, V/V, Mn/Mn, Au/Au, Pt/Pd, Pd/Pt, Ni/Pt, Pt/Ag, Pdbeladenes FeO/ BaPrCoO₃, Pr dotierte Y:BaCeO₃/ BaPrYO₃, Pt/ LaCaFeCOO₃, Ba-CeYO₃/Pt, Ni-BaCeSmO₃/ BaSrCoFeO₃+BaCeSmO₃, Ni-BaCeGdO₃/ LaSr-CoO₃+BaCeGdO₃, Ni/ BaCePrYO₃, Ni-BaCeNdO₃/LaSrCoO₃+BaCeNdO₃ und Ba_{0,5}Sr_{0,5}Co_{0,8}O_{3-α} (BSCFO) allein oder in Mischung mit Gd_{0,2}Ce_{0,8}O_{1,9} geeignet.

In einer bevorzugten Ausführungsform werden zur Ausbildung einer Membranelektrodeneinheit (Anode/Kathode) als Membran eine protonenleitende Keramik oder ein Oxid aus der Gruppe SrCeO₃, BaCeO₃, Yb:SrCeO₃, Nd:BaCeO₃, Gd:BaCeO₃, Sm:BaCeO₃, BaCaNdO₉, Y:BaCeO₃, Y:BaZrCeO₃, Pr-dotiertes Y:BaCeO₃, Gd:BaCeO₃, Ba-Ce_{0,9}Y_{0,1}O_{2,95} (BYC), SrCe_{0,95}Yb_{0,05}O_{3-α}, BaCe_{0,9}Nd_{0,10}O_{3-α}, CaZr_{0,96}In_{0,04}O₃; Sr-dotiertes La₃P₃O₉, Sr-dotiertes LaPO₄, BaCe_{0,9}Y_{0,1}O_{3-α} (BCY), BaZr_{0,9}Y_{0,1}O_{3-α} (BZY), Ba₃Ca_{1,18}Nb_{1,82}O_{8,73} (BCN18), (La_{1,95}Ca_{0,05})Zr₂O_{7-α}, La₂Ce₂O₇, Eu₂Zr₂O₇, H₂S/(B₂S₃ oder Ga₂S₃)/GeS₂, SiS₂, As₂S₃ oder Csl; BaCe_{0,8}Gd_{0,2}O_{3-α} (BCGO); Gd-dotierte BaCeO₃ wie BaCe_{0,85}Y_{0,5}O_{3-α} (BCY15) und BaCe_{0,8}Sm_{0,2}O_{-α 3} oder Mischungen der vorstehenden Materialien erhalten und die als Anoden/Kathoden Kombination Pt/Pt, Ni/Ni, Pd/Pd, Pt/Ni, Pt/Pd, Ni/Pt, Ni/Pd, Pd/Pt oder Pd/Ni enthalten.

Gemäß einer bevorzugten Ausführungsform der vorliegenden Erfindung wird die Abtrennung des Wasserstoffs aus dem Reaktionsgemisch R in einem Reaktor durchgeführt, der mit mindestens einer MEA ausgestattet ist, so dass die Reaktionszone auf der Retentatseite der Membran liegt bzw. diese bildet. Dies kann beispielsweise in einem Reaktor, dessen Außenwände zumindest teilweise aus MEAs gebildet sind, durchgeführt werden.

Eine Beschreibung von Reaktortypen, die durch Modifikation mit mindestens einer MEA im erfindungsgemäßen Verfahren eingesetzt werden können, enthält "Catalytica® Studies Division, Oxidative Dehydrogenation and Alternative Dehydrogenation Processes" (Study Number 4192 OD, 1993, 430 Ferguson Drive, Mountain View, California, 94043-5272, USA).

Geeignete Reaktorformen sind Wirbelschichtreaktoren, zirkulierende Wirbelschichtreaktoren, Festbettreaktoren, Festbettrohrreaktoren und Rohrbündelreaktoren. Bei Festbettrohrreaktoren und Rohrbündelreaktoren befindet sich der Katalysator als Festbett in einem Reaktionsrohr oder in einem Bündel von Reaktionsrohren, wobei die Außenwand des Reaktors mindestens eine MEA aufweist. Übliche Reaktionsrohr-Innendurchmesser betragen etwa 10 bis 15 cm. Ein typischer dehydrierender Aromatisierungsrohrbündelreaktor umfasst ca. 300 bis 1000 Reaktionsrohre.

In einer Ausführungsform des erfindungsgemäßen Verfahrens weisen auch die einzelnen Reaktionsrohre jeweils mindestens eine MEA auf, so dass ein kontinuierlicher Wasserstofftransport von den Reaktionsrohren zur Außenwand des Reaktors gewährleistet wird.

Die zu dem Reaktionsgemisch R führende Reaktion kann auch heterogen katalysiert im Wirbelbett oder im zirkulierenden Wirbelbett durchgeführt werden, wobei die Außenwand des Reaktors bevorzugt mindestens eine MEA aufweist.

Die zu dem Reaktionsgemisch führende Reaktion kann auch in einem Hordenreaktor durchgeführt werden, wobei gemäß einer bevorzugten Ausführungsform die Außenwand des Reaktors mindestens eine MEA aufweist. Der Reaktor enthält ein oder mehrere aufeinander folgende Katalysatorbetten. Die Katalysatorbetten werden vorzugsweise radial oder axial vom Reaktionsgas durchströmt. Im Allgemeinen wird ein solcher Hordenreaktor mit einem Katalysatorfestbett betrieben. Im einfachsten Fall sind die Katalysatorfestbetten in einem Schachtofenreaktor axial oder in den Ringspalten von konzentrisch angeordneten zylindrischen Gitterrosten angeordnet. Ein Schachtofenreaktor entspricht einem Hordenreaktor mit nur einer Horde.

Die Abtrennung des Wasserstoffs kann bei Temperaturen von 200 bis 1200°C bevorzugt von 500 bis 1100°C, besonders bevorzugt von 600 bis 1000°C durchgeführt werden.

Die Abtrennung des Wasserstoffs wird vorzugsweise bei Drücken von 0,5 bis 10 bar, bevorzugt von 1 bis 6 bar, besonders bevorzugt von 1 bis 4 bar vorgenommen. Gemäß einer bevorzugten Ausführungsform der Erfindung liegt der Druckunterschied zwischen der Retentat- und der Permeatseite der Membran unter 1 bar, bevorzugt unter 0,5 bar, besonders bevorzugt besteht kein Druckunterschied.

Die Abtrennung des Wasserstoffs gemäß Alternative I wird erfindungsgemäß bei Spannungen von 0,05 bis 2000 mV, bevorzugt von 100 bis 1500 mV, besonders bevorzugt von 100 bis 900 mV und ganz besonders bevorzugt von 100 bis 800 mV gegenüber einer RHE (Wasserstoff-Referenzelektrode) durchgeführt.

Der Sauerstoff enthaltende Strom, der gemäß Alternative II eingesetzt wird, enthält erfindungsgemäß mindestens 15 mol-%, bevorzugt mindestens 20 mol-% Sauerstoff. In einer bevorzugten Ausführungsform wird Luft als Sauerstoff enthaltender Strom O eingesetzt oder mit Sauerstoff angereicherte Luft. Die Luft wird üblicherweise ungereinigt verwendet.

Die Flussrate des Stroms O wird so gewählt, dass die O₂-Menge stöchiometrisch das 1- bis 10-fache, bevorzugt das 1,2- bis 5-fache und besonders bevorzugt das 1,5- bis 2,5-fache der H₂-Menge beträgt.

Erfindungsgemäß wird mindestens ein Teil des im Reaktionsgemisch R enthaltenen Wasserstoffs abgetrennt. Bevorzugt werden mindestens 30 %, besonders bevorzugt mindestens 50 %, besonders bevorzugt mindestens 70 % und ganz besonders bevorzugt mindestens 95 %, insbesondere mindestens 98 % abgetrennt.

Der auf der Permeatseite gemäß Alternative I erhaltene Wasserstoff enthält üblicherweise höchstens 5 mol-%, bevorzugt höchstens 2 mol-% und besonders bevorzugt höchstens 1 mol-% Verbindungen, die kein Wasserstoff sind.

Der Wasserstoff kann erfindungsgemäß nach Alternative I, nach Alternative II oder nach beiden Alternativen abgetrennt werden. Letzteres bedeutet, dass mindestens ein Teils des Wasserstoffs als Wasserstoff und mindestens ein Teil des Wasserstoffs unter Erzeugung von elektrischer Energie als Wasser erhalten wird. Wie viel des im Produktstrom P enthaltenen Wasserstoffs jeweils nach Alternative I und II abgetrennt wird, kann vom Anwender nach Bedarf angepasst werden. Gemäß einer bevorzugten Ausführungsform der Erfindung wird Abtrennung des Wasserstoffs nach Alternative I und II mindestens soviel Wasserstoff gemäß II abgetrennt, dass der dabei erzeugte Strom ausreicht, um den Energiebedarf für die Wasserstoffabtrennung gemäß Alternative I zu decken.

Wird der Wasserstoff aus dem Reaktionsgemisch R gemäß beiden Alternativen I und II abgetrennt, so wird dies vorzugsweise räumlich getrennt durchgeführt, da bei Gegenwart von Sauerstoff auf der Permeatseite üblicherweise die Protonen direkt zu Wasserstoff reagieren. Das Reaktionsgemisch kann beispielsweise nacheinander zunächst an einer MEA entlang geleitet werden, die auf der Permeatseite mit einem Strom O in Kontakt steht, so dass ein Teil des Wasserstoffs als Wasser abgetrennt wird. Anschließend wird das Reaktionsgemisch R an einer MEA entlang geführt werden, an die eine Spannung angelegt ist, so dass der Wasserstoff als Wasserstoff abgetrennt wird. Die räumliche Trennung zwischen den beiden Alternativen I und II kann auch darin bestehen, dass der Produktstrom P zwischen zwei beispielsweise sich gegenüberliegenden Membranen hindurchgeleitet wird, von denen eine auf der Permeatseite mit einem Strom O in Kontakt steht und an die andere eine Spannung angelegt wird. Dabei befinden sich die MEAs gemäß einer bevorzugten Ausführungsform in dem Reaktor, in dem das Reaktionsgemisch R gebildet wird und besonders bevorzugt bilden die MEAs mindestens einen Teil der räumlichen Begrenzung der Reaktionszone, in der die zum Reaktionsgemisch R führende Reaktion stattfindet.

Bei den Reaktionen, die zu den Wasserstoff enthaltenden Reaktionsgemischen R führen, kann es sich zum einen um Reaktionen handeln, denen von vornherein Wasserstoff zugesetzt wird, um beispielsweise die Lebensdauer des bei der Reaktion eingesetzten Katalysators zu verlängern, oder um Reaktionen, bei denen Wasserstoff als ein Reaktionsprodukt entsteht.

Erfindungsgemäß bevorzugt handelt es sich bei der zu dem Reaktionsgemisch R führenden, Wasserstoff bildenden Reaktion um die Dehydroaromatisierung von aliphatischen Kohlenwasserstoffen mit 1 bis 4 Kohlenstoffatomen. Dabei findet erfindungsgemäß die Umsetzung des Eduktstroms E unter nicht-oxidativen Bedingungen in Gegenwart eines Katalysators zu einem aromatische Kohlenwasserstoffe enthaltenden Produktstrom P statt. Die in dem Eduktstrom E enthaltenen C₁-C₄-Aliphaten reagieren unter Dehydrierung und Cyclisierung zu den entsprechenden Aromaten, wobei Wasserstoff freigesetzt wird.

Durch die kontinuierliche Entfernung des bei der dehydrierenden Aromatisierung entstehenden Wasserstoffs aus dem Reaktorinneren, also der Reaktionszone, wird das Gleichgewicht der Reaktion von Methan-haltigem Gasgemisch zu aromatischen Kohlenwasserstoffen in Richtung der aromatischen Kohlenwasserstoffe verschoben. Daher ist es möglich, die dehydrierende Aromatisierung bei deutlich niedrigeren Temperaturen durchzuführen, oder bei gleicher Temperatur den Methanumsatz zu erhöhen. Beispielsrechnungen zeigen unter der Annahme, dass nur Benzol gebildet wird, dass bei 750°C 10,9 % Methan zu Benzol umgesetzt werden. Wenn 40 % des gebildeten Wasserstoffs direkt aus der Reaktionszone entfernt werden, kann die Reaktion bei gleicher Ausbeute bei 679°C durchgeführt werden. Umgekehrt kann die Methan-Umsetzung von 10,9 zu fast 22 mol-% gesteigert werden, wenn bei 750°C Reaktionstemperatur von den im Gleichgewicht entstehenden 0,0206 kg H₂/ kg CH₄ elektrochemisch 0,02 kg H₂ / kg CH₄ entfernt werden.

Nicht-oxidativ gemäß der vorliegenden Erfindung bedeutet in Bezug auf die DHAM, dass die Konzentration von Oxidationsmitteln wie Sauerstoff oder Stickoxiden im Eduktstrom E unterhalb von 5 Gew.-%, bevorzugt unterhalb von 1 Gew.-%, besonders bevorzugt unterhalb von 0,1 Gew.-% liegt. Ganz besonders bevorzugt ist der Eduktstrom E frei von Sauerstoff. Ebenfall besonders bevorzugt ist eine Konzentration an Oxidationsmitteln im Eduktstrom E, die gleich groß oder geringer ist als die Konzentration an Oxidationsmitteln in der Quelle, aus der die C₁-C₄-Aliphaten stammen.

Erfindungsgemäß enthält der Eduktstrom E mindestens einen Aliphaten mit 1 bis 4 Kohlenstoffatomen. Zu diesen Aliphaten gehören beispielsweise Methan, Ethan, Propan, n-Butan, i-Butan, Ethen, Propen, 1- und 2-Buten, Isobuten. In einer Ausführungsform der Erfindung enthält der Eduktstrom E mindestens 50 mol-%, bevorzugt mindestens 60 mol-%, besonders bevorzugt mindestens 70 mol-%, außerordentlich bevorzugt mindestens 80 mol-%, insbesondere mindestens 90 mol-% C₁-C₄-Aliphaten.

Unter den Aliphaten werden besonders bevorzugt die gesättigten Alkane verwendet, Eduktstrom E enthält dann bevorzugt mindestens 50 mol-%, bevorzugt mindestens 60 mol-%, besonders bevorzugt mindestens 70 mol-% außerordentlich bevorzugt mindestens 80 mol-%, insbesondere mindestens 90 mol-% Alkane mit 1 bis 4 C-Atomen.

Unter den Alkanen sind Methan und Ethan bevorzugt, insbesondere Methan. Gemäß dieser Ausführungsform der vorliegenden Erfindung enthält der Eduktstrom E bevorzugt mindestens 50 mol-%, bevorzugt mindestens 60 mol-%, besonders bevorzugt mindestens 70 mol-% außerordentlich bevorzugt mindestens 80 mol-%, insbesondere mindestens 90 mol-% Methan.

Bevorzugt wird als Quelle der C₁-C₄-Aliphaten Erdgas eingesetzt. Die typische Zusammensetzung von Erdgas sieht folgendermaßen aus: 75 bis 99 mol-% Methan, 0,01 bis 15 mol-% Ethan, 0,01 bis 10 mol-% Propan, bis zu 6 mol-% Butan, bis zu 30 mol-% Kohlendioxid, bis zu 30 mol-% Schwefelwasserstoff, bis zu 15 mol-% Stickstoff und bis zu 5 mol-% Helium. Das Erdgas kann vor dem Einsatz in dem erfindungsgemäßen Verfahren nach dem Fachmann bekannten Methoden gereinigt und angereichert werden. Zur Reinigung gehört beispielsweise die Entfernung von gegebenenfalls im Erdgas vorhandenen Schwefelwasserstoff oder Kohlendioxid und weiterer, im anschließenden Verfahren unerwünschter Verbindungen.

Die in dem Eduktstrom E enthaltenen C₁-C₄-Aliphaten können auch aus anderen Quellen stammen, beispielsweise bei der Erdölraffination angefallen sein. Die C₁-C₄-Aliphaten können auch regenerativ (z.B. Biogas) oder synthetisch (z.B. Fischer-Tropsch-Synthese) hergestellt worden sein.

Falls als C₁-C₄-Aliphaten-Quelle Biogas verwendet wird, kann der Eduktstrom E zusätzlich noch Ammoniak, Spuren von niederen Alkoholen und weitere, für Biogas typische Beimischungen enthalten.

In einer weiteren Ausführungsform des erfindungsgemäßen Verfahrens kann als Eduktstrom E LPG (Liquid Petroleum Gas) eingesetzt werden. Gemäß einer weiteren Ausführungsform des erfindungsgemäßen Verfahrens kann als Eduktstrom E LNG (Liquified Natural Gas) eingesetzt werden.

Dem Eduktstrom E kann zusätzlich Wasserstoff, Wasserdampf, Kohlenmonoxid, Kohlendioxid, Stickstoff sowie ein oder mehrere Edelgase beigemischt werden.

Erfindungsgemäß wird die DHAM in Gegenwart geeigneter Katalysatoren durchgeführt. Generell können alle Katalysatoren, die die DHAM katalysieren, eingesetzt werden. Üblicherweise enthalten die DHAM-Katalysatoren einen porösen Träger und mindestens ein darauf aufgebrachtes Metall. Der Träger enthält üblicherweise eine kristalline oder amorphe anorganische Verbindung.

Erfindungsgemäß enthält der Katalysator bevorzugt mindestens ein Metallosilikat als Träger. Bevorzugt werden als Träger Aluminiumsilikate eingesetzt. Ganz besonders bevorzugt werden erfindungsgemäß als Träger Zeolithe verwendet. Bei Zeolithen handelt es sich um Aluminiumsilikate, die bei ihrer Herstellung üblicherweise in der Natriumform anfallen. In der Na-Form wird die wegen des Austausches von 4-wertigen Si-Atomen gegen 3-wertige Al-Atomen im Kristallgitter vorhandene überschüssige negative Ladung durch Na-Ionen ausgeglichen. Statt allein Natrium kann der Zeolith zum Ladungsausgleich auch weitere Alkali- und/oder Erdalkalüonen enthalten. Erfindungsgemäß bevorzugt weist der in den Katalysatoren enthaltene mindestens eine Zeolith eine Struktur auf, die aus den Strukturtypen Pentasil und MWW ausgewählt ist und besonders bevorzugt aus den Strukturtypen MFI, MEL, Mischstrukturen aus MFI und MEL und MWW ausgewählt ist. Ganz besonders bevorzugt wird ein Zeolith des Typs ZSM-5 oder MCM-22 eingesetzt. Die Bezeichnungen der Strukturtypen der Zeolithe entsprechen den Angaben in W. M. Meier, D. H. Olson und Ch. Baerlocher, "Atlas of Zeolithe Structure Types", Elsevier, 3. Auflage, Amsterdam 2001. Die Synthese der Zeolithe ist dem Fachmann bekannt und kann beispielsweise ausgehend von Alkalialuminat, Alkalisilikat und amorphem SiO₂ unter hydrothermalen Bedingungen durchgeführt werden. Hierbei kann über organische Templat-Moleküle, über die Temperatur und weitere experimentelle Parameter die Art der gebildeten Kanalsysteme im Zeolithen gesteuert werden.

Die Zeolithe können neben Al weitere Elemente wie Ga, B, Fe oder In enthalten.

Vorzugsweise werden die bevorzugt als Träger verwendeten Zeolithe in der H-Form oder der Ammoniumform, in denen die Zeolithe auch kommerziell erhältlich sind, eingesetzt.

Bei der Überführung von der Na-Form in die H-Form werden die im Zeolithen enthaltenden Alkali- und/oder Erdalkalüonen gegen Protonen ausgetauscht. Ein übliches und gemäß der vorliegenden Erfindung bevorzugtes Verfahren zum Überführen der Katalysatoren in die H-Form ist ein zweistufiger Prozess, bei dem die Alkali- und/oder Erdalkaliionen zunächst gegen Ammoniumionen ausgetauscht werden. Beim Erhitzen des Zeoliths auf etwa 400 bis 500°C zersetzt sich das Ammoniumion in flüchtigen Ammoniak und in das im Zeolithen verbleibende Proton.

Dazu wird der Zeolith mit einer NH₄-haltigen Mischung behandelt. Als NH₄-haltige Komponente der NH₄-haltigen Mischung wird ein Ammoniumsalz, ausgewählt aus der Gruppe Ammoniumchlorid, Ammoniumcarbonat, Ammoniumhydrogencarbonat, Ammoniumnitrat, Ammoniumphosphat, Ammoniumacetat, Ammoniumhydrogenphosphat, Ammoniumdihydrogenphosphat, Ammoniumsulfat und Ammoniumhydrogensulfat eingesetzt. Bevorzugt wird als NH₄-haltige Komponente Ammoniumnitrat verwendet.

Die Behandlung des Zeolithen mit der NH₄-haltigen Mischung erfolgt nach den bekannten, zum Ammoniumaustausch von Zeolithen geeigneten Methoden. Dazu zählt beispielsweise das Tränken, Tauchen oder Besprühen des Zeolithen mit einer Ammoniumsalzlösung, wobei die Lösung im Allgemeinen im Überschuss angewendet wird. Als Lösungsmittel werden vorzugsweise Wasser und/oder Alkohole verwendet. Die Mischung enthält üblicherweise 1 bis 20 Gew.-% der eingesetzten NH₄-Komponente. Die Behandlung mit der NH₄-haltigen Mischung wird üblicherweise über einen Zeitraum von mehreren Stunden und bei erhöhten Temperaturen durchgeführt. Nach dem Einwirken der NH₄-haltigen Mischung auf den Zeolithen kann überschüssige Mischung entfernt und der Zeolith gewaschen werden. Anschließend wird der Zeolith bei 40 bis 150°C für mehrere Stunden, üblicherweise 4 bis 20 Stunden getrocknet. Daran schließt sich die Kalzinierung des Zeolithen bei Temperaturen von 300 bis 700°C, bevorzugt von 350 bis 650°C und besonders bevorzugt von 500 bis 600°C an. Die Dauer der Kalzinierung beträgt üblicherweise 2 bis 24 Stunden, bevorzugt 3 bis 10 Stunden, besonders bevorzugt 4 bis 6 Stunden.

In einer bevorzugten Ausführungsform der vorliegenden Erfindung werden als Träger Zeolithe, die erneut mit einer NH₄-haltigen Mischung behandelt und anschließend getrocknet wurden, eingesetzt. Die erneute Behandlung der Zeolithe mit der NH₄-haltigen Mischung erfolgt gemäß der vorstehenden Beschreibung.

Kommerziell erhältliche Zeolithe in der H-Form haben üblicherweise bereits einen ersten Ammoniumaustausch durch Behandeln mit einer NH₄-haltigen Mischung mit anschließendem Trocknen und Kalzinieren durchlaufen. Deshalb können erfindungsgemäß kommerziell erworbene, in der H-Form vorliegende Zeolithe als Träger a) eingesetzt werden, bevorzugt werden sie jedoch einer erneuten Behandlung mit einer NH₄-haltigen Mischungen unterzogen und gegebenenfalls kalziniert.

Üblicherweise enthält der DHAM-Katalysator mindestens ein Metall. Üblicherweise wird das Metall ausgewählt aus den Gruppen 3 bis 12 des Periodensystems der Elemente (IUPAC). Erfindungsgemäß bevorzugt enthält der DHAM-Katalysator mindestens ein Metall ausgewählt aus den Übergangsmetallen der Nebengruppen 5 bis 11. Besonders bevorzugt enthält der DHAM-Katalysator mindestens ein Metall ausgewählt aus der Gruppe Mo, W, Mn, Tc, Re, Fe, Ru, Os, Co, Rh, Ir, Ni, Pd, Pt, Cu, Cr, Nb, Ta, Ag und Au. Insbesondere enthält der DHAM-Katalysator mindestens ein Metall ausgewählt aus der Gruppe Mo, W, Re, Fe, Ru, Os, Co, Rh, Ir, Ni, Pd, Pt, Cu. Ganz besonders bevorzugt enthält der DHAM-Katalysator mindestens ein Metall ausgewählt aus der Gruppe Mo, W und Re.

Erfindungsgemäß ebenfalls bevorzugt enthält der DHAM-Katalysator mindestens ein Metall als Aktivkomponente und mindestens ein weiteres Metall als Dotierung. Die Aktivkomponente wird erfindungsgemäß ausgewählt aus Mo, W, Re, Ru, Os, Rh, Ir, Pd, Pt. Die Dotierung wird erfindungsgemäß ausgewählt aus der Gruppe Cr, Mn, Fe, Co, Nb, Ta, Ni, Cu, V, Zn, Zr und Ga, bevorzugt aus der Gruppe Fe, Co, Nb, Ta, Ni, Cu und Cr. Erfindungsgemäß kann der DHAM-Katalysator mehr als ein Metall als Aktivkomponente und mehr als ein Metall als Dotierung enthalten. Diese werden jeweils aus den für die Aktivkomponente und die Dotierung angegebenen Metallen ausgewählt. Bevorzugt enthält der Katalysator ein Metall als Aktivkomponente und ein oder zwei Metalle als Dotierung.

Das mindestens eine Metall wird erfindungsgemäß nasschemisch oder trockenchemisch gemäß den dem Fachmann bekannten Methoden auf den Träger aufgebracht.

Nasschemisch werden die Metalle in Form wässriger, organischer oder organischwässriger Lösungen ihrer Salze oder Komplexe durch Imprägnieren des Trägers mit der entsprechenden Lösung aufgebracht. Als Lösungsmittel kann auch überkritisches CO₂ dienen. Die Imprägnierung kann nach der incipient-wetness-Methode erfolgen, bei der das poröse Volumen des Trägers durch in etwa gleiches Volumen an Imprägnierlösung aufgefüllt wird und man - gegebenenfalls nach einer Reifung - den Träger trocknet. Man kann auch mit einem Überschuss an Lösung arbeiten, wobei das Volumen dieser Lösung größer ist als das poröse Volumen des Trägers. Hierbei wird der Träger mit der Imprägnierlösung gemischt und ausreichend lange gerührt. Weiterhin ist es möglich, den Träger mit einer Lösung der entsprechenden Metallverbindung zu besprühen. Es sind auch andere, dem Fachmann bekannte Herstellmethoden wie Ausfällen der Metallverbindungen auf dem Träger, Aufsprühen einer Metallverbindung enthaltenden Lösung, Soltränkung etc. möglich. Nach dem Aufbringen des mindestens einen Metalls auf den Träger wird der Katalysator bei etwa 80 bis 130°C üblicherweise 4 bis 20 Stunden im Vakuum oder an Luft getrocknet.

Erfindungsgemäß kann das mindestens eine Metall auch auf trockenchemischem Wege aufgebracht werden, beispielsweise indem die bei höheren Temperaturen gasförmigen Metallcarbonyle wie Mo(CO)₆, W(CO)₆ und Re₂(CO)₁₀ aus der Gasphase auf dem Träger abgeschieden werden. Das Abscheiden der Metallcarbonylverbindung wird im Anschluss an das Kalzinieren des Trägers durchgeführt. Es kann auch in Form eines feinen Pulvers, beispielsweise als Carbid, mit dem Träger vermischt werden.

Erfindungsgemäß enthält der Katalysator 0,1 bis 20 Gew.-%, bevorzugt 0,2 bis 15 Gew.-%, besonders bevorzugt 0,5 bis 10 Gew.-%, jeweils bezogen auf das Gesamtgewicht des Katalysators des mindestens einen Metalls. Der Katalysator kann nur ein Metall enthalten, er kann auch ein Gemisch aus zwei, drei oder mehr Metallen enthalten. Die Metalle können nasschemisch gemeinsam in einer Lösung aufgebracht werden oder in verschiedenen Lösungen nacheinander mit Trocknungsschritten zwischen den einzelnen Auftragungen. Die Metalle können auch gemischt aufgebracht werden, d.h. ein Teil nasschemisch und ein anderer Teil trockenchemisch. Zwischen den Auftragungen der Metallverbindungen kann nach Bedarf entsprechend der vorstehenden Beschreibung kalziniert werden.

Erfindungsgemäß kann der Katalysator mindestens ein Metall aus der Gruppe der Aktivkomponente in Verbindung mit mindestens einem Metall ausgewählt aus der Gruppe der Dotierung enthalten. In diesem Fall liegt die Konzentration der Aktivkomponente bei 0,1 bis 20 Gew.-%, bevorzugt 0,2 bis 15 Gew.-%, besonders bevorzugt bei 0,5 bis 10 Gew.-%, jeweils bezogen auf das Gesamtgewicht des Katalysators. Die Dotierung liegt in diesem Fall im Katalysator erfindungsgemäß in einer Konzentration von mindestens 0,1 Gew.-%, bevorzugt mindestens 0,2 Gew.-%, ganz besonders bevorzugt mindestens 0,5 Gew.-%, bezogen auf das Gesamtgewicht des Katalysators vor.

Gemäß einer weiteren bevorzugten Ausführungsform der vorliegenden Erfindung wird der Katalysator mit einem Bindemittel vermischt. Als Bindemittel eignen sich die üblichen, dem Fachmann bekannten Bindemittel wie Aluminiumoxid- und/oder Si-haltige Bindemittel. Besonders bevorzugt sind dabei Si-haltige Bindemittel; insbesondere eignen sich Tetraalkoxysilane, Polysiloxane und kolloidale SiO₂-Sole.

Erfindungsgemäß erfolgt nach Zugabe des Bindemittels ein Formgebungsschritt, in dem die Katalysatormasse gemäß den dem Fachmann bekannten Verfahren zu Formkörpern verarbeitet werden. Als formgebende Verfahren sind dabei beispielsweise Versprühen einer den Träger a) bzw. die Katalysatormasse enthaltenden Suspension, Sprühtrocknung, Tablettieren, Verpressen im feuchten oder trockenen Zustand und Extrudieren zu nennen. Zwei oder mehrere dieser Verfahren können auch kombiniert werden. Für das Verformen können Hilfsmittel wie Porenbildner und Anteigungsmittel oder auch andere, dem Fachmann bekannte Zusatzstoffe eingesetzt werden. Mögliche Anteigungsmittel sind solche Verbindungen, die zur Verbesserung der Misch-, Knet- und Fließeigenschaften führen. Vorzugsweise sind dies im Rahmen der vorliegenden Erfindung organische, insbesondere hydrophile Polymere wie beispielsweise Cellulose, Cellulosederivate wie Methylcellulose, Stärke wie Kartoffelstärke, Tapetenkleister, Acrylate, Polyacrylate, Polymethacrylate, Polyvinylalkohole, Polyvinalpyrrolidon, Polyisobutylen, Polytetrahydrofuran, Polyglykolether, Fettsäureverbindungen, Wachsemulsionen, Wasser oder Mischungen aus zwei oder mehr dieser Verbindungen. Als Porenbildner sind im Rahmen der vorliegenden Erfindung beispielsweise in Wasser oder wässrigen Lösungsmittelgemischen dispergier-, suspendier- oder emulgierbare Verbindungen wie Polyalkylenoxide, Polystyrol, Polyacrylate, Polymethacrylate, Polyolefine, Polyamide, Polyester, Kohlenhydrate, Cellulose, Cellulosederivate wie beispielsweise Methylcellulose, Zuckernaturfasern, Pulp, Graphit oder Mischungen aus zwei oder mehr dieser Verbindungen zu nennen. Porenbildner und/oder Anteigungsmittel werden nach der Verformung bevorzugt durch mindestens einen geeigneten Trocknungs- und/oder Kalzinierungsschritt aus dem erhaltenen Formkörper entfernt. Die dazu erforderlichen Bedingungen können analog zu den vorstehend für Kalzinierung beschriebenen Parametern gewählt werden und sind dem Fachmann bekannt.

Insbesondere für den Einsatz als Wirbelschichtkatalysatoren werden die Katalysatorformkörper mittels Sprühtrocknung hergestellt.

Die Geometrie der erfindungsgemäß erhältlichen Katalysatoren kann beispielsweise kugelförmig (hohl oder voll), zylindrisch (hohl oder voll), ring-, sattel-, stern-, bienenwaben- oder tablettenförmig sein. Weiterhin kommen Extrudate beispielsweise in Strang-, Trilob-, Quatrolob, Stern- oder Hohlzylinderform in Frage. Weiterhin kann die zu formende Katalysatormasse extrudiert, kalziniert und die so erhaltenen Extrudate gebrochen und zu Split oder Pulver verarbeitet werden. Der Split kann in verschiedene Siebfraktionen getrennt werden.

Gemäß einer bevorzugten Ausführungsform der Erfindung wird der Katalysator als Formkörper oder Split eingesetzt.

Gemäß einer weiteren bevorzugten Ausführungsform wird der Katalysator als Pulver eingesetzt. Das Katalysatorpulver kann dabei Bindemittel enthalten, aber auch frei von Bindemittel vorliegen.

Wenn der erfindungsgemäße Katalysator ein Bindemittel enthält, liegt dies in einer Konzentration von 5 bis 80 Gew.-%, bezogen auf das Gesamtgewicht des Katalysators vor, bevorzugt von 10 bis 50 Gew.-%, besonders bevorzugt von 10 bis 30 Gew.-%.

Es kann von Vorteil sein, den zur Dehydroaromatisierung von C₁-C₄-Aliphaten verwendeten Katalysator vor der eigentlichen Reaktion zu aktivieren.

Diese Aktivierung kann mit einem C₁-C₄-Alkan, wie z.B. Ethan, Propan, Butan oder einem Gemisch hiervon, vorzugsweise Butan, erfolgen. Die Aktivierung wird bei einer Temperatur von 250 bis 850°C, vorzugsweise bei 350 bis 650°C, und einem Druck von 0,5 bis 5 bar, vorzugsweise bei 0,5 bis 2 bar, durchgeführt. Üblicherweise liegt die GHSV (Gas Hourly Space Velocity) bei der Aktivierung bei 100 bis 4000 h⁻¹, vorzugsweise bei 500 bis 2000 h⁻¹.

Es ist aber auch möglich eine Aktivierung durchzuführen, indem der Eduktstrom E das C₁-C₄-Alkan, oder ein Gemisch hiervon, per se schon enthält oder das C₁-C₄-Alkan, oder ein Gemisch hiervon, dem Eduktstrom E zugesetzt wird. Die Aktivierung wird bei einer Temperatur von 250 bis 650°C, vorzugsweise bei 350 bis 550°C, und einem Druck von 0,5 bis 5 bar, vorzugsweise bei 0,5 bis 2 bar, durchgeführt.

In einer weiteren Ausgestaltungsform ist es auch möglich zusätzlich zu dem C₁-C₄-Alkan noch Wasserstoff beizufügen.

Gemäß einer bevorzugten Ausführungsform der vorliegenden Erfindung wird der Katalysator mit einem H₂ enthaltenden Gasstrom aktiviert, der zusätzlich Inertgase wie N₂, He, Ne und Ar enthalten kann.

Erfindungsgemäß wird die Dehydroaromatisierung von C₁-C₄-Aliphaten in Gegenwart eines Katalysators bei Temperaturen von 400 bis 1000°C, bevorzugt von 500 bis 900°C, besonders bevorzugt von 600 bis 800°C, insbesondere von 700 bis 800°C, bei einem Druck von 0.5 bis 100 bar, bevorzugt bei 1 bis 30 bar, besonders bevorzugt bei 1 bis 10 bar, insbesondere 1 bis 5 bar, durchgeführt. Gemäß der vorliegenden Erfindung wird die Umsetzung bei einer GHSV (Gas Hourly Space Velocity) von 100 bis 10 000 h⁻¹, vorzugsweise von 200 bis 3000 h⁻¹ durchgeführt.

Erfindungsgemäß kann der Katalysator unverdünnt oder mit Inertmaterial vermischt eingesetzt werden. Als Inertmaterial kann jedes Material dienen, das sich bei den in den Reaktionszonen herrschenden Reaktionsbedingungen inert verhält, d.h. nicht reagiert. Als Inertmaterial eignet sich besonders der undotierte, für den Katalysator eingesetzte Träger, aber auch inerte Zeolithe, Aluminiumoxid, Siliziumdioxid etc. Die Teilchengröße des Inertmaterials liegt im Bereich der Größe der Katalysatorteilchen.

Bevorzugt gemäß der vorliegenden Erfindung liegt der unverdünnte Katalysator oder mit Inertmaterial vermischte, als Fest-, Wander- oder Wirbelbett vor. Besonders bevorzugt liegt der Katalysator bzw. das Gemisch aus Katalysator und Inertmaterial als Wirbelschicht vor.

Der bei der DHAM eingesetzte Katalysator wird gemäß einer Ausführungsform der Erfindung regelmäßig regeneriert. Die Regenerierung kann gemäß den üblichen, dem Fachmann bekannten Verfahren durchgeführt werden. Erfindungsgemäß bevorzugt wird die Regenerierung unter reduzierenden Bedingungen mittels eines Wasserstoff enthaltenden Gasstroms durchgeführt.

Die Regenerierung wird bei Temperaturen von 600°C bis 1000°C und besonders bevorzugt von 700°C bis 900°C und Drücken von 1 bar bis 30 bar, bevorzugt von 1 bar bis 15 bar und besonders bevorzugt von 1 bis 10 bar durchgeführt.

Die C₁-C₄-Aliphaten werden erfindungsgemäß unter Freisetzung von H₂ zu Aromaten umgesetzt. Der Produktstrom P enthält daher mindestens einen aromatischen Kohlenwasserstoff ausgewählt aus der Gruppe Benzol, Toluol, Ethylbenzol, Styrol, Xylol und Naphthalin. Besonders bevorzugt enthält er Benzol und Toluol. Weiterhin enthält der Produktstrom nicht umgesetzte C₁-C₄-Aliphate, entstandenen Wasserstoff und die im Eduktstrom E enthaltenen Inertgase wie N₂, He, Ne, Ar, dem Eduktstrom E zugesetzte Stoffe wie H₂ sowie bereits im Eduktstrom E vorhandene Verunreinigungen.

## Patentansprüche

1. Verfahren zur elektrochemischen Abtrennung von Wasserstoff aus einem Wasserstoff erhaltenden Reaktionsgemisch R mittels einer gasdichten Membran-Elektroden-Assembly, die mindestens eine selektiv protonenleitende Membran und auf jeder Seite der Membran mindestens einen Elektrodenkatalysator aufweist, wobei auf der Retentatseite der Membran mindestens ein Teil des im Reaktionsgemisch R enthaltenen Wasserstoffs an dem Anodenkatalysator zu Protonen oxidiert wird und die Protonen nach Durchqueren der Membran auf der Permeatseite an dem Kathodenkatalysator gemäß
I zu Wasserstoff reduziert werden und/oder
II mit Sauerstoff zu Wasser umgesetzt werden, wobei der Sauerstoff aus einem Sauerstoff enthaltenden Strom O stammt, der mit der Permeatseite der Membran in Kontakt gebracht wird,
wobei als selektiv protonenleitende Membran eine Keramikmembran eingesetzt wird,
**dadurch gekennzeichnet, dass** der Wasserstoff direkt aus der Reaktionszone abgetrennt wird, in der das Reaktionsgemisch R gebildet wird, und dass es sich bei der Wasserstoff bildenden Reaktion um die nicht-oxidative Dehydroaromatisierung von aliphatischen Kohlenwasserstoffen mit 1 bis 4 C-Atomen in Gegenwart eines Katalysators handelt.

2. Verfahren gemäß Anspruch 1, **dadurch gekennzeichnet, dass** das Reaktionsgemisch R aus einer Wasserstoff bildenden Reaktion stammt.

3. Verfahren gemäß Anspruch 1 oder 2, **dadurch gekennzeichnet, dass** der Wasserstoff aus dem Reaktionsgemisch R abgetrennt wird, während die zum Reaktionsgemisch R führende Reaktion stattfindet.

4. Verfahren gemäß einem der Ansprüche 1 bis 3, **dadurch gekennzeichnet, dass** bei gleichzeitiger Abtrennung des Wasserstoffs gemäß I und II mindestens ein Teil des bei II erzeugten Stroms in I eingesetzt wird.

5. Verfahren gemäß einem der Ansprüche 1 bis 4, **dadurch gekennzeichnet, dass** bei Abtrennung des Wasserstoffs gemäß II mindestens ein Teil der bei II entstehenden Wärme der Reaktionszone zugeführt wird.

6. Verfahren gemäß einem der Ansprüche 1 bis 5, **dadurch gekennzeichnet, dass** der Wasserstoff gemäß I unter Anlegen einer Spannung von 0,05 bis 2000 mV gegenüber einer Wasserstoff-Referenzelektrode abgetrennt wird.

7. Verfahren gemäß einem der Ansprüche 1 bis 6, **dadurch gekennzeichnet, dass** der Sauerstoff enthaltende Strom O mindestens 15 mol-% Sauerstoff enthält.

8. Verfahren gemäß einem der Ansprüche 1 bis 7, **dadurch gekennzeichnet, dass** als Sauerstoff enthaltender Strom O Luft eingesetzt wird.

9. Verfahren gemäß einem der Ansprüche 1 bis 8, **dadurch gekennzeichnet, dass** die Elektroden der Membran-Elektroden-Assembly als Gasdiffusionselektroden ausgestaltet sind.

10. Verfahren gemäß einem der Ansprüche 1 bis 9, **dadurch gekennzeichnet, dass** der Wasserstoff bei 200 bis 1200°C abgetrennt wird.

## Claims

1. A process for the electrochemical separation of hydrogen from a hydrogen-comprising reaction mixture R by means of a gastight membrane-electrode assembly comprising at least one selectively proton-conducting membrane and at least one electrode catalyst on each side of the membrane, where at least part of the hydrogen present in the reaction mixture R is oxidized to protons over the anode catalyst on the retentate side of the membrane and the protons are, after passing through the membrane to the permeate side,
I reduced to hydrogen over the cathode catalyst and/or
II reacted with oxygen over the cathode catalyst to form water, with the oxygen originating from an oxygen-comprising stream 0 which is brought into contact with the permeate side of the membrane,
where a ceramic membrane is used as selectively proton-conducting membrane,
wherein the hydrogen is separated off directly from the reaction zone in which the reaction mixture R is formed, and wherein the hydrogen-forming reaction is the nonoxidative dehydroaromatization of aliphatic hydrocarbons having from 1 to 4 carbon atoms in the presence of a catalyst.

2. The process according to claim 1, wherein the reaction mixture R originates from a hydrogen-forming reaction.

3. The process according to claim 1 or 2, wherein the hydrogen is separated off from the reaction mixture R while the reaction leading to the reaction mixture R is taking place.

4. The process according to any of claims 1 to 3, wherein the hydrogen is separated off according to both I and II and at least part of the stream produced in II is used in I.

5. The process according to any of claims 1 to 4, wherein, when the hydrogen is separated off according to II, at least part of the heat evolved in II is introduced into the reaction zone.

6. The process according to any of claims 1 to 5, wherein the hydrogen is separated off according to I with application of a voltage of from 0.05 to 2000 mV relative to a hydrogen reference electrode.

7. The process according to any of claims 1 to 6, wherein the oxygen-comprising stream O comprises at least 15 mol% of oxygen.

8. The process according to any of claims 1 to 7, wherein air is used as oxygen-comprising stream O.

9. The process according to any of claims 1 to 8, wherein the electrodes of the membrane-electrode assembly are configured as gas diffusion electrodes.

10. The process according to any of claims 1 to 9, wherein the hydrogen is separated off at from 200 to 1200°C.

## Revendications

1. Procédé pour la séparation électrochimique d'hydrogène d'un mélange réactionnel R contenant de l'hydrogène au moyen d'un ensemble d'électrode à membrane imperméable aux gaz, qui présente au moins une membrane guidant les protons de manière sélective et au moins un catalyseur d'électrode sur chaque côté de la membrane, au moins une partie de l'hydrogène contenu dans le mélange réactionnel R étant oxydée en protons côté retentat de la membrane sur le catalyseur anodique et les protons, après avoir traversé la membrane, sur le côté perméat du catalyseur cathodique,
selon I étant réduits en hydrogène et/ou
selon II étant transformés avec de l'oxygène en eau, l'oxygène provenant d'un flux 0 contenant de l'oxygène qui est mis en contact avec le côté perméat de la membrane,
une membrane céramique étant utilisée comme membrane guidant les protons de manière sélective, **caractérisé en ce que** l'hydrogène est séparé directement de la zone de réaction dans laquelle le mélange réactionnel R est formé et **en ce qu'**il s'agit, pour la réaction formant l'hydrogène, de la déshydroaromatisation non oxydante d'hydrocarbures aliphatiques comprenant 1 à 4 atomes de carbone en présence d'un catalyseur.

2. Procédé selon la revendication 1, **caractérisé en ce que** le mélange réactionnel R provient d'une réaction formant de l'hydrogène.

3. Procédé selon la revendication 1 ou 2, **caractérisé en ce que** l'hydrogène est séparé du mélange réactionnel R pendant que la réaction conduisant au mélange réactionnel R a lieu.

4. Procédé selon l'une quelconque des revendications 1 à 3, **caractérisé en ce que**, lors de la séparation simultanée de l'hydrogène selon I et II, au moins une partie du flux obtenu lors de II est utilisée dans I.

5. Procédé selon l'une quelconque des revendications 1 à 4, **caractérisé en ce que**, lors de la séparation de l'hydrogène selon II, au moins une partie de la chaleur formée lors de II est introduite dans la zone de réaction.

6. Procédé selon l'une quelconque des revendications 1 à 5, **caractérisé en ce que** l'hydrogène est séparé selon I par application d'une tension de 0,05 à 2000 mV par rapport à une électrode de référence à l'hydrogène.

7. Procédé selon l'une quelconque des revendications 1 à 6, **caractérisé en ce que** le flux O contenant de l'oxygène contient au moins 15% en mole d'oxygène.

8. Procédé selon l'une quelconque des revendications 1 à 7, **caractérisé en ce qu'**on utilise de l'air comme flux 0 contenant de l'oxygène.

9. Procédé selon l'une quelconque des revendications 1 à 8, **caractérisé en ce que** les électrodes de l'ensemble d'électrode à membrane sont conçues comme électrodes à diffusion de gaz.

10. Procédé selon l'une quelconque des revendications 1 à 9, **caractérisé en ce que** l'hydrogène est séparé à 200 jusqu'à 1200°C.
